# EUROPEAN PATENT SPECIFICATION

(11) **EP 3 742 767 B1**
(45) Date of publication and mention of the grant of the patent: **24.08.2022**
(21) Application number: 19175562.8
(22) Date of filing: 21.05.2019
(51) Int. Cl.: H04W 4/44, H04L 9/40, H04W 4/02, G05D 1/00, H04W 4/38, H04W 4/46, H04L 65/60, H04L 65/80, H04W 28/02

(54) **METHOD FOR PREDICTING A QUALITY OF SERVICE FOR A COMMUNICATION BETWEEN AT LEAST TWO COMMUNICATION PARTNERS, ONE OF WHICH MAY BE A MOVING VEHICLE; APPARATUS FOR PERFORMING THE STEPS OF THE METHOD AND COMPUTER PROGRAM**
VERFAHREN ZUR VORHERSAGE DER DIENSTQUALITÄT EINER KOMMUNIKATION ZWISCHEN ZWEI KOMMUNIKATIONSPARTNERN, EINER DAVON MÖGLICHERWEISE EIN BEWEGLICHES FAHRZEUG; VORRICHTUNG ZUR AUSFÜHRUNG DER VERFAHRENSSCHRITTE UND COMPUTERPROGRAM
PROCÉDÉ DE PRÉDICTION DE LA QUALITÉ DE SERVICE POUR UNE COMMUNICATION ENTRE AU MOINS DEUX PARTNERS DE COMMUNICATION, L'UN D'ENTRE EUX POUVANT ÊTRE UN VÉHICULE EN MOUVEMENT; DISPOSITIF POUR METTRE EN OEUVRE LES ÉTAPES DUDIT PROCÉDÉ ET PROGRAMME INFORMATIQUE

(43) Date of publication of application: 25.11.2020
(73) Proprietor: Volkswagen AG, 38440 Wolfsburg (DE)
(72) Inventor: Jornod, Guillaume, 10245 Berlin (DE); El Assaad, Ahmad, 38440 Wolfsburg (DE); Pfadler, Andreas, 13359 Berlin (DE)
(74) Representative: Rittner, Karsten

(56) References cited:
- EP-A1- 3 322 204
- WO-A1-2019/081027
- CN-A- 106 899 524
- US-A1- 2009 117 851
- US-A1- 2013 304 934
- US-A1- 2019 049 259
- VEEN VAN DER A-J ET AL: "SUBSPACE-BASED SIGNAL ANALYSIS USING SINGULAR VALUE DECOMPOSITION", PROCEEDINGS OF THE IEEE, IEEE. NEW YORK, US, vol. 81, no. 9, 1 September 1993 (1993-09-01), pages 1277-1308, XP000408616, ISSN: 0018-9219, DOI: 10.1109/5.237536
- "3rd Generation Partnership Project; Technical Specification Group Services and System Aspects; Study on enhancement of 3GPP Support for 5G V2X Services (Release 16)", 3GPP STANDARD; TECHNICAL REPORT; 3GPP TR 22.886, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V16.2.0, 21 December 2018 (2018-12-21), pages 1-76, XP051591359, [retrieved on 2018-12-21]
- LIANGHAI JI ET AL: "Applying Multiradio Access Technologies for Reliability Enhancement in Vehicle-to-Everything Communication", IEEE ACCESS, vol. 6, 21 April 2018 (2018-04-21), pages 23079-23094, XP011683766, DOI: 10.1109/ACCESS.2018.2829606 [retrieved on 2018-05-14]

## Description

The disclosure relates to a method predicting a quality of service for a future communication between at least two communication partners. The proposal also discloses a corresponding apparatus for performing the steps of the method and a corresponding computer program.

3GPP has been and is releasing features for the new generation of cellular mobile communication, 5G, including vehicle-to-everything (V2X) features. A large panel of vehicular use cases have been designed, ranging from infotainment to cooperative driving. Depending on the application, the requirement on the Uu link in the scope of vehicle-to-network (V2N) communication drastically changes. When it comes to safety-related time-critical applicationsuch as tele-operated driving, in which a command centre (CC) takes over some driving functions of the vehicle, or a platoon with some back-end located decision function, these requirements are the exchange of information with low latency, high data rate and high reliability.

This invention addresses the prediction of QoS on the Uu link as a part of a V2N communication end-to-end path.

Autonomous driving (sometimes referred to as automatic driving, automated driving or piloted driving) is the movement of vehicles, mobile robots and driverless transport systems which are largely autonomous. There are different degrees of autonomous driving. In this case, autonomous driving is also spoken at certain levels even if a driver is still present in the vehicle, who possibly only takes over the monitoring of the automatic driving operation. In Europe, various transport ministries, for example in Germany, the Federal Institute for Road Systems (Bundesanstalt für Straßenwesen) was involved, worked together and defined the following autonomous stages.
- Level 0: "Driver only", the driver drives himself, steers, gives gas, brakes, etc..
- Level 1: Certain assistance systems help with vehicle operation (including a cruise control system - Automatic Cruise Control ACC).
- Level 2: Partial automation. Therein, automatic parking, tracking function, general longitudinal guidance, acceleration, deceleration, etc. are taken over by the assistance systems (including collision avoidance).
- Level 3: High automation. The driver does not have to monitor the system continuously. The vehicle independently performs functions such as the triggering of the turn signal, lane change and tracking. The driver can turn to other things, but if requested, the system is requested to take over the lead within a pre-warning period. This form of autonomy is technically feasible on motorways. Legislators are working to allow Level 3 vehicles. The legal framework has already been created.
- Level 4: Full automation. The guidance of the vehicle is permanently adopted by the system. If the system is no longer able to handle the tasks, the driver can be asked to take the lead.
- Level 5: No driver required. Apart from setting the target and starting the system, no human intervention is required.

A slightly different definition of levels is known from the Society of Automotive Engineers SAE . It is referred to the SAE J3016 standard in this regard. This could also be used instead of the above given definition. Future cooperative driving applications are envisioned to significantly improve efficiency and comfort of automated driving. Increase in cooperation between vehicles pose specific requirements on communication system and the way messages are exchanged among cooperating vehicles.

Future cooperative driving applications are envisioned to significantly improve efficiency and comfort of automated driving. Increase in cooperation between vehicles pose specific requirements on communication system and the way messages are exchanged among cooperating vehicles.

Currently the following mobile communication technologies are applicable for bringing connectivity to a vehicle: 3GPP-based UMTS, HSPA, LTE, and the upcoming 5G standards.

For the V2N or V2X communication the following technologies are readily available. LTE-based or 5G-based cellular V2X or V2N communication at the physical layer of the Uu link.

In such systems, reactive systems reacting on changes in quality of service (QoS) are not suitable, indeed, they would limit the application to the lower-bound performance of the communications system and would severely limit the range of applications. Indeed, vehicular applications require time to adapt their functional settings, such as inter-vehicle distance for platooning or more generally to adapt the vehicle dynamics, the trajectory, etc.

On another hand, the ability to predict the future quality of service (QoS) is an enabler for these applications, as they have the ability to cope with a drop in QoS performance in advance. Predicting future QoS in a network is facilitated by the static nature of one of the communication nodes, the base station. Known solutions use the study of the static (slow fading) properties of the surroundings of the base station. These, however, cannot cope with a dynamic element altering the quality of service; incoming communicating vehicular traffic for instance.

In this regard, EP 3 322 204 A1 discloses a driver assistance system for improving the availability and reliability in vehicles operating in an autonomous driving mode. The driver assistance system comprises at least one backend-server. The backend-server comprises a Quality of Services (QoS) map module operable to maintain at least one up-to-date QoS map for at least one mobile network operator (MNO), and a scheduling module operable to schedule appropriate map data downloads to the vehicle. The driver assistance system further comprises at least one vehicle, the vehicle comprising a transmission module operable to transmit driving data to the backend-server in predefined time intervals, the driving data comprising positioning data of the vehicle and network performance data based on passive and active measurements for the at least one MNO, to receive, from the scheduling module in the backend-server the appropriate map data, wherein the scheduling module schedules the appropriate map data downloads based on the transmitted driving data, and to control the vehicle in the autonomous driving mode based on the appropriate map data.

WO 2019/081027 A1 discloses a network entity comprising a network entity controller configured to transmit a notification to a mobile device, wherein the notification comprises information about available Quality of Service, QoS, and to receive a confirmation message from the mobile device informing about an acceptance of the notified QoS. The QoS may be predicted by the network entity controller.

Examples of QoS prediction based on data modelling taking into account the statistical distribution of the QoS data can be found in US 2009/0117851 A1, US 2013/0304934 A1, CN 106899524 A, or the article by A.-J. van der Veen et al.: "Subspace Based Signal Analysis Using Singular Value Decomposition", PROCEEDINGS OF THE IEEE, Vol. 81 (1993), pp. 1277-1308.

What is needed is an improved solution to predict the QoS for dynamically changing communication connections.

These and other objects are solved with a method for setting up an abstracted channel representation for a communication between at least two moving communication partners according to claim 1, a corresponding apparatus for performing steps of the method according to claim 7, and a corresponding computer program according to claim 9.

The dependent claims contain advantageous developments and improvements to the method, device and computer program according to the disclosure.

The proposed solution operates in three steps: a data gathering step, a data modelling step and an operating step. The data modelling step uses the gathered data; the operating step uses the created model.

A general solution of the problem consists in a method for predicting a quality of service for a communication over a communication link, where at least one communication partner is moving. The method comprises a step of data gathering, in which a plurality of instantaneous link characteristics are measured and recorded in a database along with the position and time information for the moving communication partner, a step of data modelling, in which the statistical distribution of a given target QoS is modelled, and a step of predicting a target QoS.

With the data gathering step at the base station of a cellular communication system, it is possible to record for a given target QoS parameter (data rate for instance) the certain link characteristics for each V2N transmission that is received at the base station These observations are gathered in a database-like storage system, table, data frame...!

With the data modelling step, it is intended to evaluate the recorded link characteristics and to provide a model with which the following QoS prediction step can work.

The step of data modelling comprises a step of subdividing the plurality of link characteristics into a plurality of intervals and setting up subspaces for at least a selection of the plurality of link characteristics including position and time based on the subdivision of link characteristics in a plurality of intervals. The statistical distribution of a given QoS is then modelled separately for said subspaces. By the adjustment of the subdivision step it can be controlled how fine the model could represent the real behavior on the communication link. On the other hand the more the model is refined, the greater is the processing expenditure for calculating a prediction. Therefore adjusting the subdivision step is a good tool for controlling model accuracy and calculating expenditure.

In said step of subdividing the plurality of link characteristics the value range of said link characteristic is subdivided into a plurality of equal length intervals or by using a plurality of defined quantiles. Very often a subdivision in equal length intervals is appropriate. The nature of the communication link characteristic may however require a more sophisticated statistical evaluation based on quantiles.

It is advantageous if in the data gathering step the instantaneous link characteristics are measured and recorded in a table for a certain target QoS with entries for said plurality of link characteristics plus the position and time of the moving communication partner of said transmissions over said communication link.

The following data modelling step can be performed using an empirical cumulative distribution function (ECDF) estimation, a kernel density estimation (KDE) or more advanced statistical or machine learning methods (mixtures models etc.) to allow a very accurate QoS prediction.

This modelling step can be done a posteriori, that is after a data gathering period, or online, where it will be updated regularly as new observations with measurement results come in.

This allows to model the joint influence of the different features without establishing the approximation of the highly non-linear function that links the features with the target value. In this approach the time data is used to model seasonality. Most of the features (predictors) are continuous variables. Predicting a QoS value would then be approximating the function that, given the predictors, will yield the QoS value. Instead, the method, thanks to the subdivision in subspaces, allows to separately model the prediction for a discrete set of target values. A simplified example would be to model the packet error rate (PER) for two predictors: number of communicating nodes and distance to the base station. According to the usual approach it is tried to approximate the function PER = f (#, d). Based on the proposal four models are created one for high density / short distance, one for high density / long distance, one for low density / short distance, and one for low density / long distance. Each of these four models could be, for example, a statistical distribution based on the mean and standard deviation previously recorded. Scaling up this example, in a more general embodiment we would have one model per combination of the sub-intervals of all our predictors. Each model will deliver the probability for a certain target QoS value for the assigned subspace, only.

In a preferred embodiment a QoS prediction request message is received before said step of QoS prediction will be performed and wherein one or more target QoS parameter for which a QoS prediction is requested is received in said QoS prediction request message. Preferably, this QoS prediction request message also contains the local parameters of the vehicle for which the estimation is requested, e.g. geographical position and planned navigation path.

Here, typical target QoS parameters comprise one or more of the QoS parameters predicted data rate, predicted latency, predicted loss rate, predicted throughput or predicted jitter.

In a further advantageous embodiment said data modelling step is performed a posteriori, that is after a predetermined data gathering period is over or online, as new measurement results are received. Both variants are possible where the first variant would be easier to implement.

QoS prediction is also part of the proposal. During this phase, the target QoS value will be predicted. I.e. an application requests a certain target QoS and the model can return an estimate for the probability that this target QoS values could be achieved for the planned time period. This is done by observing (or predicting for the geographical position and time for instance) the different features, and to match them to the corresponding sub-space established in the previous step. It is needed to access the appropriate statistical distribution of the requested target QoS and to be able to compute the probability that this QoS takes certain values of interest. If the QoS prediction is not good enough, the application can react and take some action to increase the safety. This is very important for autonomous driving.

Finally, when the QoS prediction step has been performed, in one embodiment a QoS prediction response message is transmitted back to the sender of the QoS prediction request message containing the estimate of the target QoS parameter for which a QoS prediction has been requested in said QoS prediction request message, for at least a time period of a plurality of the next few seconds.

The proposal also concerns an apparatus adapted for performing the steps in the method according to any one of the previous claims, wherein said apparatus comprises a processing device, and memory means for recording the gathered data.

Here it is advantageous that said apparatus is connected to a base station of a cellular mobile communication system. Preferably it will be located at the base station.

The proposal also concerns a computer program, comprising program code, which when run in a processing device of said apparatus, performs the steps of data gathering, data modelling and QoS prediction according to the claimed method.

Exemplary embodiments of the present disclosure are shown in the drawing and are explained in greater detail in the following description.

In the drawings:
- Fig. 1: illustrates the principle architecture of a V2V and V2X communication system;
- Fig. 2: shows a block diagram of a vehicle's electronics system;
- Fig. 3: shows a diagram illustrating the message exchange between a communication device and the apparatus for predicting a quality of service;
- Fig. 4: shows a flow chart for a computer program for implementing the proposal;
- Fig. 5: shows the structure of a database for gathering a plurality of transmission features;
- Fig. 6: shows a three-dimensional feature space subdivided into sub-spaces for data modelling;
- Fig. 7: shows a first application scenario of tele-operated driving; and
- Fig. 8: shows a second application scenario of tele-operated driving.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided by the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

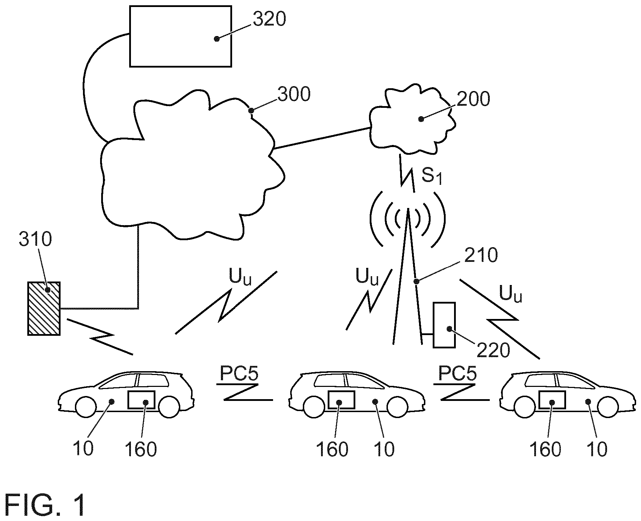

Fig. 1 shows the system architecture for the proposal. Reference number 10 denotes a user device. The depicted user device is exemplified as a vehicle and more in particular it is a car. In other examples it may be differently exemplified, e.g. a smart phone, a smart watch, a tablet computer, notebook or laptop computer or the like. Shown is a passenger car. If exemplified with a vehicle, it may be any type of a vehicle. Examples of other types of vehicles are: buses, motorcycles, commercial vehicles, in particular trucks, agricultural machinery, construction machinery, rail vehicles, etc. The use of the invention would be generally in land vehicles, rail vehicles, watercrafts and aircrafts possible. The vehicle 10 is equipped with an on-board connectivity module 160 including corresponding antenna such that the vehicle 10 can participate in any form of a mobile communication service. Fig. 1 illustrates that vehicle 10 may transmit and receive signals to and from a base station 210 of a mobile communication service provider.

Such base station 210 may be an eNodeB base station of an LTE (Long Term Evolution) mobile communication service provider or a gNB base station of a 5G mobile communication provider. The base station 210 and the corresponding equipment is part of a mobile communication network with a plurality of network cells where each cell is served by one base station 210.

The base station 210 in Fig. 1 is positioned close to a main road on which the vehicle 10 is driving. Of course, other vehicles may also drive on the road. In the terminology of LTE, a mobile terminal corresponds to a user equipment UE, which allows a user to access network services, connecting to the UTRAN or Evolved-UTRAN via the radio interface. Typically, such user equipment corresponds to a smart phone. Of course, mobile terminals are also used in the vehicles 10. The cars 10 are equipped with said on-board communication module OBU 160. This OBU corresponds to an LTE or any other communication module with which the vehicle 10 can receive mobile data in downstream direction and can send such data in upstream or in direct device-to-device direction.

In terms of the LTE mobile communication system, the Evolved UMTS Terrestrial Radio Acess Network E-UTRAN of LTE consists of a plurality of eNodeBs, providing the E-UTRA user plane (PDCP/RLC/MAC/PHY) and control plane (RRC) protocol terminations towards the UE. The eNodeBs are interconnected with each other by means of the so-called X2 interface. The eNodeBs are also connected by means of the so-called S1 interface to the EPC (Evolved Packet Core) 200, more specifically to the MME (Mobility Management Entity) by means of the S1-MME and to the Serving Gateway (S-GW) by means of the S1-U interface.

From this general architecture Fig. 1 shows that eNodeB 210 is connected to the EPC 200 via the S1 interface and that EPC 200 is connected to the Internet 300. The backend server 320 to which the vehicles 10 send messages to and receive messages from is also connected to the Internet 300. In the field of cooperative and autonomous driving the backend server 320 typically is located in a traffic control center. The S1 interface may be reduced to practice with wireless communication technology such as with the help of microwave radio communication by means of directional antennas or wired communication technology based on fiber cables. Finally, an infrastructure network component is also shown. This may be exemplified by a road-side unit RSU 310. For the ease of implementation, it is considered that all components have assigned an Internet address, typically in the form of an IPv6 address, such that the packets transporting messages between the components can be routed correspondingly.

The various interfaces of the LTE network architecture are standardized. It is particularly referred to the various LTE specifications, which are publicly available for the sake of sufficiently disclosing further implementation details.

As already mentioned in the consistory clause, one prominent example of a cooperative driving maneuver is called "platooning". Platooning refers to the intelligent convoy driving as an application, which is also known as "high density platooning" when the inter vehicle distances within the platoon are small. The distances d between the vehicles of the convoy, e.g. trucks are adapted to the traffic situation and controlled. The aim is to reduce the distance d between the convoy vehicles as much as possible to reduce energy consumption. For this purpose, messages must be constantly exchanged between the convoy vehicles. In one form of realization of a platoon, there is one vehicle which is coordinating the cooperative driving maneuver. It is the vehicle at the front of the platoon, which is called the platoon leader.

Typically, in high density platooning, trucks of appropriate length band together to cover a distance to save energy and protect the environment. All vehicles are equipped with a GNSS receiver corresponding to Global Navigation Satellite System. Examples of a GNSS receiver are a GPS-receiver corresponding to Global Positioning System, Galilei-, GLONASS- and Beidou-receiver. All vehicles of the platoon are equipped with said on-board communication unit 160 including direct vehicle communication capability.

The vehicles may also be equipped with means for surroundings observation. The sensor system, which is used to capture the environmental objects is based on different measuring methods depending on the application. Widespread technologies are among others RADAR corresponding to Radio Detection and Ranging, LIDAR corresponding to Light detection and ranging, cameras 2D and 3D and ultrasonic sensors.

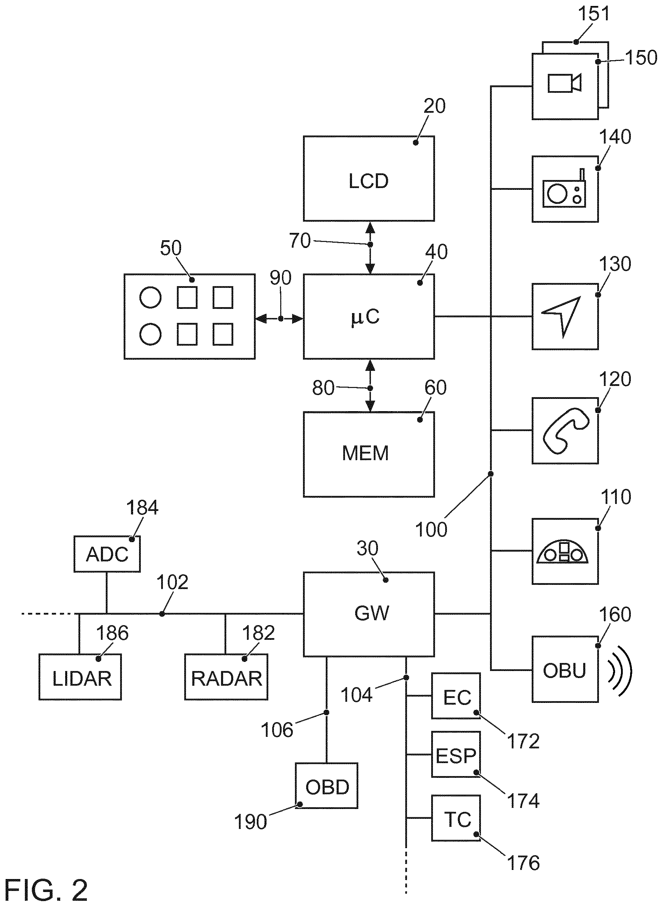

Fig. 2 shows schematically a block diagram of the vehicle's 10 board electronics system. Part of the board electronics system is an infotainment system which comprises: the touch-sensitive display unit 20, a computing device 40, an input unit 50, and a memory 60. The display unit 20 includes both a display area for displaying variable graphical information and an operator interface (touch-sensitive layer) arranged above the display area) for inputting commands by a user.

The memory device 60 is connected to the computing device 40 via a further data line 80. In the memory 60, a pictogram directory and / or symbol directory is deposited with the pictograms and / or symbols for possible overlays of additional information.

The other parts of the infotainment system such as camera 150, radio 140, navigation device 130, telephone 120 and instrument cluster 110 are connected via the data bus 100 with the computing device 40. As data bus 100 the high-speed variant of the CAN bus according to ISO standard 11898-2 may be taken into consideration. Alternatively, for example, the use of an Ethernet-based bus system such as IEEE 802.03cg is another example. Bus systems in which the data transmission via optical fibers happens are also usable. Examples are the MOST Bus (Media Oriented System Transport) or the D2B Bus (Domestic Digital Bus). For inbound and outbound wireless communication, the vehicle 10 is equipped with a communication module 160. It can be used for mobile communication, e.g. mobile communication according to the LTE standard, according to Long Term Evolution.

Reference numeral 172 denotes an engine control unit. The reference numeral 174 corresponds to an ESC control unit corresponding to electronic stability control and the reference numeral 176 denotes a transmission control unit. The networking of such control units, all of which are allocated to the category of the drive train, typically occurs with the CAN bus system (controller area network) 104. Since various sensors are installed in the motor vehicle and these are no longer only connected to individual control units, such sensor data are also distributed via the bus system 104 to the individual control devices.

However, the modern motor vehicle can also have further components such as further surroundings scanning sensors like a LIDAR (Light Detection and Ranging) sensor 186 or RADAR (Radio Detection and Ranging) sensor 182 and more video cameras 151, e.g. as a front camera, rear camera or side camera. Such sensors are used more and more in vehicles for surroundings observation. Further control devices, such as an automatic driving control unit ADC 184 and an adaptive cruise control unit ACC (not shown), etc., may be provided in the motor vehicle. There may be other systems in the vehicle, too such as UWB transceivers for inter vehicle distance measurement (not shown). The UWB transceivers may typically be used for a short distance observation, e.g. 3 to 10 m. The RADAR and LIDAR sensors 182, 186 could be used for scanning a range up to 150 m or 250 m and the cameras 150, 151 cover a range from 30 to 120 m. The components 182 to 186 are connected to another communication bus 102. The Ethernet-Bus may be a choice for this communication bus 102 due to its higher bandwidth for data transport. One Ethernet-Bus adapted to the special needs of car communication is standardized in the IEEE 802.1Q specification. Moreover, a lot of information for surroundings observation may be received via V2V communication from other road participants. Particularly for those road participants not being in line of sight LOS to the observing vehicle it is very advantageous to receive the information about their position and motion via V2V communication.

Reference number 190 denotes an on-board diagnosis interface.

For the purpose of transmitting the vehicle-relevant sensor data via the communication interface 160 to another vehicle or to a central computer 320, the gateway 30 is provided. This is connected to the different bus systems 100, 102, 104 and 106. The gateway 30 is adapted to convert the data it receives via the one bus the transmission format of the other bus so that it can be distributed in the packets specified there. For the forwarding of this data to the outside, i.e. to another motor vehicle or to central computer 320, the on-board unit 160 is equipped with the communication interface to receive these data packets and, in turn, to convert them into the transmission format of the correspondingly used mobile radio standard. The gateway 30 takes all the necessary format conversions if data are to be exchanged between the different bus systems if required.

Since autonomous driving is on the rise, a lot more data needs to be exchanged among the road participants and also between the road participants and the network. The communication systems for V2V and V2X communication need to be adapted correspondingly. The 3GPP standard setting organisation has been and is releasing features for the new generation of the 5G cellular mobile communication system, including vehicle-to-everything (V2X) features. A large panel of vehicular use cases have been designed, ranging from infotainment to cooperative driving. Depending on the application, the requirement on the Uu link in the scope of vehicle-to-network (V2N) communication drastically changes. When it comes to safety-related time-critical applications such as tele-operated driving, in which a command centre (CC) takes over some driving functions of the vehicle 10, these requirements are the exchange of information with low latency, high data rate and high reliability. Another use case corresponds to high density platooning with some back-end located decision function. Both the command centre and the back-end located decision function may be exemplified with the backend server 320 as shown in Fig. 1.

Therefore, the ability to predict the future quality of service (QoS) is an enabler for such applications, as they thus get the ability to cope with a drop in QoS performance in advance. In the following examples the QoS prediction will be requested by the tele-operated driving command centre where the backend server 320 is located.

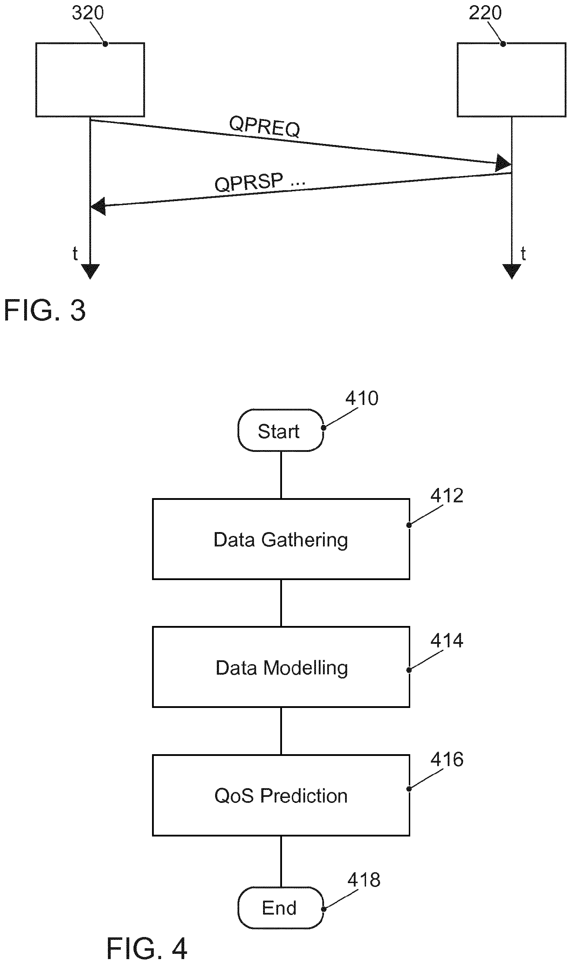

Fig. 3 now shows the message exchange process between the backend server 320 and the communication service prediction server 220 at the base station 210.

To get the best connectivity for the tele-operated driving mode, it is an idea of the proposal to inform the network operator beforehand about the planned activity and request a QoS prediction for a certain time period, e.g. the next seconds. The command centre of tele-operated driving receives back from the network operator a forecast about the service quality it could provide. Here in this example with service quality it is meant the quality the network operator can provide on the Uu link which is used for V2N communication. In a similar manner different other communication types such as V2V, or V2X communication types could also be supported by this proposal.

Fig. 3 shows that a QoS prediction request message QPREQ is sent from backend server 320 to the communication service prediction server 220 at the base station 210 of the network operator. In this embodiment it is assumed that all the base stations 210 along a main road are equipped with such communication service prediction server 220. In alternative embodiments there might be provided one communication service prediction server 220 which serves a plurality of different base stations 210. The communication service prediction server 220 responds to the requesting backend server 320 with a QoS prediction response message QPRSP to either the original QoS prediction request message QPREQ. The QoS prediction request message QPREQ contains one or more target QoS parameter (e.g. latency requirement, data rate requirement, throughput requirement or the like) for which a QoS prediction is requested. Preferably, this QoS prediction request message also contains the local parameters of the vehicle for which the estimation is requested, e.g. geographical position and planned navigation path of the vehicle 10.

This proposal here addresses the prediction of QoS on the Uu link of a mobile communication system as a part of a V2N communication end-to-end path, see also Fig. 1. The proposed solution operates in three steps: a data gathering step, a modelling step and an operating step. The modelling step makes use of the gathered data to derive a model; the operating step uses the created model to predict the QoS.

The process is illustrated in Fig. 4. The process is illustrated with a flow chart of a program that runs on the communication service prediction server 220. This program starts in program step 410. The first program step 412 is data gathering. This means that a lot of different measurements of communication link parameters will be recorded in a table at the communication service prediction server 220 at the base station 210.

The communication link may provide certain target QoS levels. For these QoS levels (data rate for instance) the base station 5G/LTE, records target QoS levels along with the following features for each V2N transmission:
- The channel model for both the uplink (UL) and the downlink (DL);
- The link budget;
- The operating frequency and the used bandwidth;
- The MIMO parameters (number of antenna on both user equipment (UE) and 5G gNB/eNB);
- The beamforming characteristics of the gNB/eNB;
- The slice type (eMBB, URLLC, mMTC) and its configuration in terms of allocated resources;
- Timestamp (hour, business day, rush hour, holidays etc.)
- The cell load;
- The geographical position of the vehicle in the cell.

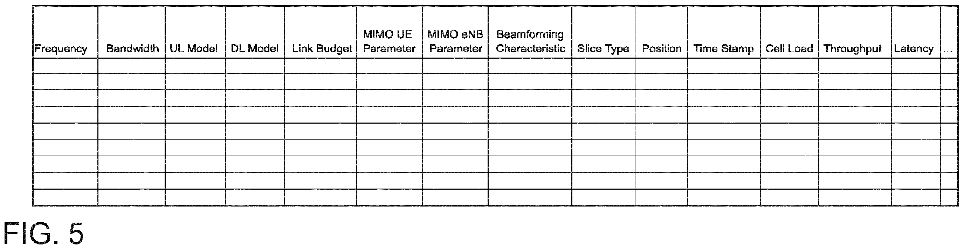

These observations are gathered in a database-like storage system, of the communication service prediction server 220. An example of such a database-like storage system is the table depicted in Fig. 5. With all the listed data items, frequency, bandwidth, UL model, DL model, link budget, MIMO UE parameter, MIMO eNB parameter, beamforming characteristic, slice type, position, time stamp, cell load, throughput, latency, ... the base station 210 has a good basis for deriving a model for predicting the QoS.

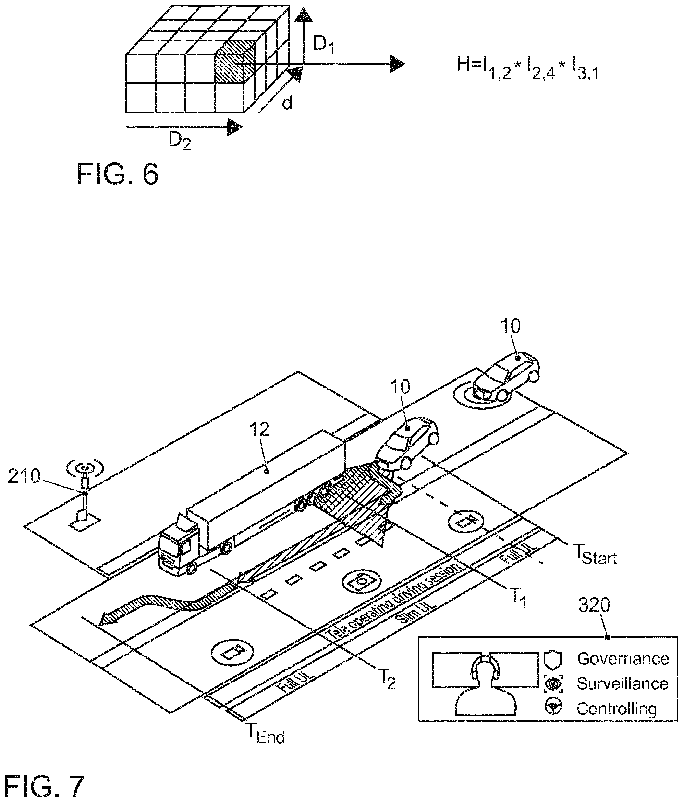

Using the stored data from the data gathering step 412, the data modelling step 414 follows. First, for preparation, the feature spaces will be subdivided into subspaces. This step is illustrated for a three-dimensional feature space, with the features Di, D₂ and d. in Fig 5. Each entry in the table of Fig. 5 corresponds to a feature. If e.g. position, time and throughput will be selected as features, the illustrated two layer cube spanned of 2 X 4 X 4 subspaces illustrated in Fig. 6 comprises the position in D₂ direction, the time in d direction, and the throughput in D₁ direction. The position might be subdivided in intervals of 200 m as an example. The time might be subdivided in intervals of seconds. This might also be differentiated in days of week. The throughput may be divided in intervals of 10 Mbit/s. For the 2 X 4 X 4 square cuboid depicted in Fig. 6, there would only be two intervals for the throughput range. This is mainly for illustrative purposes. In reality the square cuboid should have more layers reflecting a refined subdivision of the throughput. The indices in the formula depicted to the right of the cube in Fig. 6 have the following meanings. I_{1,2} means: "take the second cell in D₁ direction"; I_{2,4} means: "take the fourth cell in D₂ direction"; I_{3,1} means: "take the first cell in d direction".

Of course in a real implementation, further features from the table in Fig. 4 should be considered such that the square cuboid becomes an n-orthotope (also known as hyperrectangle). E.g. the cell load could be represented in percentage values where 100% corresponds to the full use of the capacity. A possible feature space subdivision might be in the form of intervals like in the following example:
[0 ... 10%], [10 ... 20%], [20 ... 30%], [30 ... 40%], [40 ... 50%],
[50 ... 60%], [60 ... 70%], [70 ... 80%], [80 ... 90%], [90 ... 100%].

Since the link budget is calculated in units of dBm, the value range may be divided in equidistant intervals of e.g. 10 dBm. The latency parameter may be subdivided in intervals of 10 ms or 100 ms as a further example.

It is noted, that typically a feature space is divided in sub-spaces of equal length intervals. However, there are other division methods existing such as, quantiles or any other statistical division method which may be suitable for some reason depending on the nature of the feature space.

After performing a step of subdividing the feature space, what follows is a step of modelling the statistical distribution of the target QoS (data rate for instance) for each sub-space. This modelling step can be performed using an empirical cumulative distribution function (ECDF) estimation, a kernel density estimation (KDE) or more advanced statistical or machine learning methods. So called mixture models are mentioned as an example. As a result, for each sub-space, the probability that the target QoS value is reached is calculated and recorded in a corresponding data set.

In the embodiment as depicted in Fig. 4 this modelling step 414 can be done a posteriori, that is after a data gathering period. Alternatively, it may be done online where it is updated regularly as new observations come in. In such embodiment data gathering is happening in parallel with data modelling. This allows to model the joint influence of the different features without establishing the approximation of the highly non-linear function that links the features with the target value. The preference is however to use the time data to model seasonality.

As indicated in Fig. 5, the database may be structured in the form of a table. Such table contain fields for various channel estimation and technology relevant characteristics such as frequency, bandwidth, UL Model, DL Model, link budget, MIMO parameter, beamforming characteristics, slice type, position, time, modulation scheme, cell load, achieved throughput, latency, etc.

The next step in the flow chart of Fig. 4 is QoS prediction. This step makes use of the model derived from the tables recorded in the data gathering step 412. What happens here, is that for the next few seconds the QoS parameter, e.g. the data rate will be predicted. The prediction result will be delivered to the application which requested the QoS prediction, here the backend server 320 of the tele-operated driving command center. The application can make use of the prediction result for controlling.

Two use cases will be described in the following. Both concern tele-operated driving. The first is shown in Fig. 7. Equal reference numbers correspond to the same type of components as depicted in the previous figures. Fig. 7 shows a vehicle 10 driving on a road. At the traffic control center where said backend server 320 is located there is a computer working place equipped with a number of monitors where a person is responsible for traffic control in a certain region. His job consists basically in the task of governance, surveillance and controlling. It is noted that on some neuralgic places there are surveillance cameras (not shown) installed, the video streams of which will be transferred to the traffic control center where the will be displayed on a monitor. Fig. 7 now shows a situation where a truck 12 is blocking a narrow road for a while, e.g. for the purpose of unloading goods. All the vehicles 10 behind the truck 12 have the problem that they cannot pass the truck 12 because the road is too narrow. Now if these vehicles 10 are in automatic driving mode with no driver there who could take over by manually driving, the blocking situation cannot be dissolved. Since the vehicles 10 are also equipped with camera, at the point in time T_{Start} depicted in the Fig. 7, their video stream will also be transferred to the traffic control center if the blocking situation is recognized. Behind the truck 12 the connectivity to the next base station 210 is good and the full video stream can be transferred. Aside the truck 12 the connectivity is not as good since the truck 12 is damping the signal transmissions from the vehicle 10. In front of the truck 12 the signal transmission is good again. In that situation the tele-operator can help to dissolve the blocking situation. He will take over control of the automatic vehicle 10. By remote control, the vehicle 10 will be controlled to pass the truck 12. Vehicle 10 will be steered to drive partly over the pavement to pass the truck 12. Before doing so, a QoS prediction request message QPREQ will be sent to the base station 210 to which the blocked vehicles 10 are booked in. The base station 210 performs a step of QoS prediction based on the model that has been set up as explained before. In the QoS prediction response message the base station returns its resulting QoS prediction for the next few seconds. The tele-operator commands the automatic vehicle 10 at time T₁ to switch from full video streaming mode to a still picture transferring mode because the QoS prediction forecasts that there is not enough data rate for full video streaming in the next few seconds. It is expressively noted, that the driving speed will be adapted as well during tele-operated driving, i.e. a decrease in speed is commanded. The plurality of still pictures which will be transferred from time to time is depicted in the Fig. 7. After the vehicle 10 has been steered around the truck 12, the tele-operator hands back full control to the automatic driving function in vehicle 10 and the vehicle will be switched back to full video streaming mode at time T₂ since full connectivity is back again. This mode ends at time T_{end}. where the tele-operator gives back control to the automatic driving function of the vehicle 10.

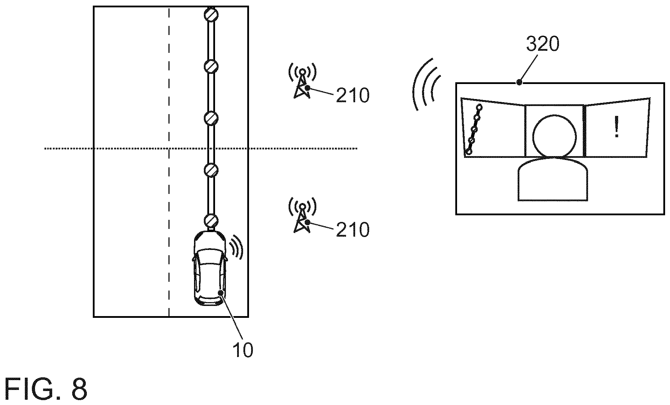

Fig. 8 shows another use case where a vehicle 10 is driving on a district road. It is approaching the end of the coverage area of the base station 210 depicted close to the vehicle 10. The end of the coverage area is marked with a dashed line. Since the vehicle 10 is in tele-operated driving mode, a good connectivity is a must for safety reason. Therefore, the tele-operator monitoring the automatic vehicle 10 gets an alert on screen that the vehicle 10 is reaching the end of the coverage area where it likely experiences a reduction in QoS for the connectivity. Again, a QoS prediction request message QPREQ will be transmitted by the backend server 320 to the base station 210. When it receives back the prediction result it will react on this by commanding the vehicle 10 to slow down if the QoS is not good enough for the momentary velocity. When the vehicle 10 was handed over to the next base station 210 the tele-operated intervention will be stopped and full control goes back to the automatic driving function of the vehicle 10.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to and executed by a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

The disclosure is not restricted to the exemplary embodiments described here. There is scope for many different adaptations and developments, which are also considered to belong to the disclosure. E.g. another use case for this proposal is high density platooning which was briefly described above. In this use case the inter vehicle distance between the platoon members will be controlled according to the QoS prediction. If the QoS prediction forecasts a drop in the service quality, the platoon will be commanded to increase the inter vehicle distance for safety reason. This may be controlled by the tele-operator or by the platoon leader.

### Reference Sign List

- 10: Vehicle
- 12: Truck
- 20: Touch Screen
- 30: Gateway
- 40: Computing Device
- 50: Operation Element Unit
- 60: Memory Unit
- 70: Data Line to Display Unit
- 80: Data Line to Memory Unit
- 90: Data Line to Operation Element Unit
- 100: 1^{st} Data Bus
- 102: 2^{nd} Data Bus
- 104: 3^{rd} Data Bus
- 106: 4^{th} Data Bus
- 110: Multifunction Display
- 120: Telephone
- 130: Navigation System
- 140: Radio
- 150: Front Camera
- 151: Back, Left, Right Camera
- 160: On-Board Unit
- 172: Engine Control Device
- 174: ESP Control Device
- 176: Transmission Control Device
- 182: RADAR Sensor
- 184: Automatic Driving Control Device
- 186: LIDAR Sensor
- 190: On-Board Diagnosis Interface
- 200: Evolved Packet Core
- 210: Base Station
- 220: Communication Service Prediction Server
- 300: Internet
- 310: Road Side Unit
- 320: Backend Server
- 410 - 418: different Program Steps of a Computer Program
- Uu: V2N Communication Link
- PC5: V2V Communication Link
- QPREQ: QoS Prediction Request Message
- QPRSP: QoS Prediction Response Message
- D1: 1^{st} Dimension
- D2: 2^{nd} Dimension
- d: 3^{rd} Dimension
- Tₛₜₐᵣₜ: Start Time for Tele-operated Driving
- T_{end}: End Time for Tele-operated Driving
- T₁: Start Time of Service Degradation
- T₂: End Time of Service Degradation

## Claims

1. A method for predicting a quality of service for a communication over a communication link (Uu), where at least one communication partner (10) is moving, the method comprising a step of data gathering, in which a plurality of instantaneous link characteristics are measured and recorded in a database along with the position and time information for the moving communication partner (10), a step of data modelling, in which the statistical distribution of a given target quality of service is modelled, and a step of predicting a target quality of service, **characterized in that** said step of data modelling comprises a step of subdividing the plurality of link characteristics into a plurality of intervals by subdividing a value range of said link characteristic into a plurality of equal length intervals or by using a plurality of defined quantiles, and setting up subspaces for at least a selection of the plurality of link characteristics including position and time based on the subdividing of link characteristics into the plurality of intervals, wherein the statistical distribution of a given target quality of service is modelled separately for said subspaces.

2. The method according to claim 1, wherein in the data gathering step the momentary link characteristics are measured and recorded in a table for a certain target quality of service with entries for said plurality of link characteristics plus the position and time of said transmissions over said communication link.

3. The method according to claim 1 or 2, wherein a quality of service prediction request message (QPREQ) is received before said step of predicting the target quality of service is performed, said quality of service prediction request message (QPREQ) comprising one or more target quality of service parameters for which a prediction is requested.

4. The method according to claim 3, wherein said target quality of service parameter comprises one or more of a predicted data rate, a predicted latency, a predicted loss rate, a predicted throughput or a predicted jitter.

5. The method according to one of the previous claims, wherein said step of data modelling is performed a posteriori, that is after a predetermined data gathering period, or online, as new measurement results are received.

6. The method according to claim 3 or 4, wherein a quality of service prediction response message (QPRSP) is transmitted back to the sender of the quality of service prediction request message (QPREQ), said quality of service prediction response message (QPRSP) containing the estimate of the target quality of service parameter for which a quality of service prediction has been requested in said quality of service prediction request message (QPREQ) message, for at least a time period of the next few seconds.

7. An apparatus adapted for performing the steps in the method according to any one of the previous claims, wherein said apparatus comprises a processing device, and memory means for recording the gathered data.

8. The apparatus according to claim 7, wherein said apparatus is connected to a base station (210) of a cellular mobile communication system.

9. A computer program comprising program code, which, when run in a processing device of said apparatus according to claim 7 or 8, causes the apparatus to perform the steps of data gathering, data modelling and predicting a target quality of service according to a method according to one of claims 1 to 6.

## Patentansprüche

1. Verfahren zum Vorhersagen einer Dienstgüte für eine Kommunikation über eine Kommunikationsverbindung (Uu), wobei sich mindestens ein Kommunikationspartner (10) bewegt, wobei das Verfahren einen Schritt der Datenerfassung umfasst, in dem mehrere augenblickliche Verbindungseigenschaften gemessen und zusammen mit der Position und Zeitinformationen für den sich bewegenden Kommunikationspartner (10) in einer Datenbank aufgezeichnet werden, einen Schritt des Modellierens der Daten, in dem die statistische Verteilung einer gegebenen Solldienstgüte modelliert wird, und einen Schritt des Vorhersagens einer Solldienstgüte, **dadurch gekennzeichnet, dass** der Schritt des Modellierens der Daten einen Schritt des Unterteilens der mehreren Verbindungseigenschaften in mehrere Intervalle durch Unterteilen eines Wertebereichs der Verbindungseigenschaft in mehrere Intervalle gleicher Länge oder durch Verwenden mehrerer definierter Quantile und des Einrichtens von Teilräumen für mindestens eine Auswahl der mehreren Verbindungseigenschaften, einschließlich Position und Zeit, basierend auf der Unterteilung der Verbindungseigenschaften in mehrere Intervalle umfasst, wobei die statistische Verteilung einer gegebenen Solldienstgüte für die Teilräume separat modelliert wird.

2. Verfahren nach Anspruch 1, wobei in dem Schritt der Datenerfassung die momentanen Verbindungseigenschaften gemessen und in einer Tabelle für eine bestimmte Solldienstgüte mit Einträgen für die mehreren Verbindungseigenschaften plus der Position und Zeit der Übertragungen über die Kommunikationsverbindung aufgezeichnet werden.

3. Verfahren nach Anspruch 1 oder 2, wobei vor dem Ausführen des Schritts des Vorhersagens der Solldienstgüte eine Solldienstgütevorhersageanforderungsnachricht (QPREQ) empfangen wird, wobei die Solldienstgütevorhersageanforderungsnachricht (QPREQ) einen oder mehrere Solldienstgüteparameter umfasst, für welche die Vorhersage angefordert wird.

4. Verfahren nach Anspruch 3, wobei der Solldienstgüteparameter eines oder mehrere von einer vorhergesagten Datenrate, einer vorhergesagten Latenz, einer vorhergesagten Verlustrate, einem vorhergesagten Durchsatz oder einem vorhergesagten Jitter umfasst.

5. Verfahren nach einem der vorhergehenden Ansprüche, wobei der Schritt des Modellierens der Daten a posteriori, das heißt nach einer festgelegten Datenerfassungsperiode, oder online ausgeführt wird, während neue Messergebnisse empfangen werden.

6. Verfahren nach Anspruch 3 oder 4, wobei eine Solldienstgütevorhersageantwortnachricht (QPRSP) zurück an den Absender der Solldienstgütevorhersageanforderungsnachricht (QPREQ) übertragen wird, wobei die Solldienstgütevorhersageantwortnachricht (QPRSP) die Schätzung des Solldienstgüteparameters enthält, für den eine Dienstgütevorhersage in der Solldienstgütevorhersageanforderungsnachricht(QPREQ) angefordert wurde, für zumindest eine Zeitspanne der nächsten paar Sekunden.

7. Vorrichtung, eingerichtet für das Ausführen der Schritte in dem Verfahren nach einem der vorhergehenden Ansprüche, wobei die Vorrichtung eine Verarbeitungseinrichtung und Speichermittel zum Aufzeichnen der erfassten Daten umfasst.

8. Vorrichtung nach Anspruch 7, wobei die Vorrichtung mit einer Basisstation (210) eines Zellularmobilfunkkommunikationssystems verbunden ist.

9. Computerprogramm, Programmcode umfassend, der, wenn er in einer Verarbeitungseinrichtung der Vorrichtung nach Anspruch 7 oder 8 läuft, die Vorrichtung veranlasst, die Schritte des Erfassens von Daten, des Modellierens der Daten und des Vorhersagens einer Solldienstgüte gemäß einem Verfahren nach einem der Ansprüche 1 bis 6 auszuführen.

## Revendications

1. Procédé de prévision d'une qualité de service pour une communication sur une liaison de communication (Uu), où au moins un partenaire (10) de la communication est en mouvement, le procédé comprenant une étape de regroupement de données, dans laquelle une pluralité de caractéristiques instantanée de liaison sont mesurées et enregistrées dans une base de données avec les informations de position et d'heure concernant le partenaire en mouvement (10) de la communication, une étape de modélisation de données, dans laquelle la distribution statistique d'une qualité de service cible donnée est modélisée, et une étape de prédiction d'une qualité de service cible, **caractérisé en ce que** ladite étape de modélisation de données comprend une étape de subdivision de la pluralité de caractéristiques de liaison en une pluralité d'intervalles par subdivision d'une plage de valeurs de ladite caractéristique de liaison en une pluralité d'intervalles de longueur égale ou par utilisation d'une pluralité de quantiles définis, et de réglage de sous-espaces pour au moins une sélection de la pluralité de caractéristiques de liaison incluant une position et une heure en fonction de la subdivision de caractéristiques de liaison en la pluralité d'intervalles, la distribution statistique d'une qualité de service cible donnée étant modélisée séparément pour lesdits sous-espaces.

2. Procédé selon la revendication 1, dans lequel, dans l'étape de regroupement de données, les caractéristiques de liaison momentanées sont mesurées et enregistrées dans une table pour une certaine qualité de service cible avec des entrées pour ladite pluralité de caractéristiques de liaison plus la position et l'heure desdites transmissions sur ladite liaison de communication.

3. Procédé selon la revendication 1 ou 2, dans lequel un message de demande de prédiction de qualité de service (QPREQ) est reçu avant l'exécution de ladite étape de prédiction de la qualité de service cible, ledit message de demande de prédiction de qualité de service (QPREQ) comprenant un ou plusieurs paramètres de qualité de service cible pour lesquels une prédiction est demandée.

4. Procédé selon la revendication 3, dans lequel ledit paramètre de qualité de service cible comprend un ou plusieurs d'un débit de données prédit, une latence prédite, un débit de perte prédit, un rendement prédit ou une gigue prédite.

5. Procédé selon l'une quelconque des revendications précédentes, dans lequel ladite étape de modélisation de données est exécutée a posteriori, c'est-à-dire après une période de regroupement de données prédéterminée, ou en ligne, lorsque de nouveaux résultats de mesure sont reçus.

6. Procédé selon la revendication 3 ou 4, dans lequel un message de réponse de prédiction de qualité de service (QPRSP) est retransmis à l'envoyeur du message de demande de prédiction de qualité de service (QPREQ), ledit message de réponse de prédiction de qualité de service (QPRSP) contenant l'estimation du paramètre de qualité de service cible pour lequel une prédiction de qualité de service a été demandée dans ledit message de demande de prédiction de qualité de service (QPREQ), pour au moins une période de temps des quelques secondes suivantes.

7. Appareil conçu pour exécuter les étapes du procédé selon l'une quelconque des revendications précédentes, dans lequel ledit appareil comprend un dispositif de traitement, et des moyens de mémoire pour l'enregistrement des données regroupées.

8. Appareil selon la revendication 7, lequel appareil étant connecté à une station de base (210) d'un système de communication mobile cellulaire.

9. Programme informatique comprenant un code de programme qui, lorsqu'il est exécuté dans un dispositif de traitement dudit appareil selon la revendication 7 ou 8, fait en sorte que l'appareil exécute les étapes de regroupement de données, de modélisation de données et de prédiction d'une qualité de service cible selon un procédé selon l'une des revendications 1 à 6.
